(19) **Europäisches Patentamt**
**European Patent Office**
**Office européen des brevets**

(11) **EP 3 112 811 B1**

(12) **EUROPEAN PATENT SPECIFICATION**

(45) Date of publication and mention
of the grant of the patent:
**27.02.2019 Bulletin 2019/09**

(51) Int Cl.:
*G01C 22/00* *(2006.01)*     *G01C 22/02* *(2006.01)*

(21) Application number: **15175007.2**

(22) Date of filing: **02.07.2015**

(54) **SYSTEM AND METHOD FOR PROCESSING A FOOT ACCELERATION SIGNAL**

SYSTEM UND VERFAHREN ZUR VERARBEITUNG EINES FUSSBESCHLEUNIGUNGSSIGNALS

SYSTÈME ET PROCÉDÉ DE TRAITEMENT D'UN SIGNAL D'ACCÉLÉRATION DE PIED

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017 Bulletin 2017/01**

(73) Proprietor: **Embedded Sensor Solutions B.V.
6861 AE  Oosterbeek (NL)**

(72) Inventor: **Damen, E. P. N.
6861 AE Oosterbeek (NL)**

(74) Representative: **De Vries & Metman
Overschiestraat 180
1062 XK Amsterdam (NL)**

(56) References cited:
**EP-A1- 0 977 974     EP-A1- 1 019 789
EP-A2- 1 253 404     US-A1- 2008 214 360**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The invention relates to a system and method for processing a foot acceleration signal. More specifically it relates to a system with an acceleration sensor and a signal processing system, wherein at least the acceleration sensor is attachable to the foot of a user.

BACKGROUND

In the past years it has become apparent that regular exercise is an important factor against cardiovascular illnesses. Further it has been shown that regular exercise has a positive effect on the mental and physical condition of a person. Many individuals therefore turned to their own fitness program of regular jogging, running or walking. Because of the growing popularity of walking, jogging, and running, the number of devices aiding those people who walk, jog or run, is growing as well.

In the literature several systems are known that use the step distance as starting point to derive various parameters that are of interest to a runner or walker, such as speed, average speed, distance traversed and calories expended.

US 6,356,856 discloses a system for measuring the speed of a person while running or walking on a surface. A single acceleration sensor measures the acceleration in the forward direction and provides an acceleration signal which is amplified and subsequently sampled by an analog to digital converter. The digital signal is processed by a microprocessor which executes an algorithm that determines the stride length and the stride duration from the digitized acceleration signal and calculates the speed and the distance traversed. The information thus obtained is transmitted by means of a radio frequency transmitter and received by a radio frequency receiver in a watch or other device which comprises a display which can be viewed by the runner or walker. The speed and distance traversed is displayed on the display, along with other useful information, such as average speed, maximum speed, total distance traversed, calories expended, and heartbeat.

US 2008/0214360 A1 discloses a system for estimating motion parameters corresponding to a user, which system may generally include a receiver operable to receive a signal from an external source, an inertial sensor operable to be coupled with the user and arbitrarily oriented relative to the direction of user motion for generation of a signal corresponding to user motion, and a processing system in communication with the receiver and inertial sensor.

EP 1253404 A2 discloses an apparatus for determining a displacement of a pedestrian by detecting accelerations of said pedestrian. The apparatus comprises sensing means for detecting accelerations along a direction which is substantially non-vertical. The apparatus further comprises characteristic determining means for determining at least one characteristic feature of said detected accelerations correlated with a displacement step motion. Furthermore, the apparatus comprises displacement determining means for determining said displacement on the basis of said determined characteristic feature(s).

EP 1019789 A1 discloses a device for analyzing motion of a foot relative to a surface. The device comprises a motion sensing device supported in relation to the foot, wherein the motion sensing device is configured and arranged to provide an output signal indicative of motion of the foot. The motion sensing device does not require compression forces thereon to sense motion. The device further comprises a signal processing circuit coupled to the motion sensing device to receive the output signal therefrom, wherein the processing circuit is configured to analyze the output signal of the motion sensing device to determine at least one moment that the foot leaves the surface.

As seen from the above, the acceleration signal from the acceleration sensor attached to the foot of the user constitutes an important parameter for the calculation of the step distance and subsequent calculations of other parameters, such as speed and distance traversed.

SUMMARY

It is an object of the present disclosure to provide an improved system and method for processing the acceleration signals generated in response to measurement of an acceleration of a foot.

To that end, a system according to claim 1 is disclosed. The system comprises at least one acceleration sensor and a signal processing system. The at least one acceleration sensor measures the acceleration of a foot during a movement of the foot from a first position of the foot on a surface to a second position of the foot on the surface. The distance between the first position and second position of the foot can be considered the step distance, also referred to as stride length.

It should be noted that the first position of the foot may be defined, for example, as the position of the toe of the shoe on the ground at the moment the toe is about to take off from the ground at the beginning of a step. The second position of the foot may be defined as the position of the toe of the shoe when the toe lands again on the ground at the end of a step.

The acceleration sensor generates a first acceleration signal comprising a plurality of acceleration values in response to measuring the acceleration.

It should be appreciated that an acceleration sensor may be configured to measure accelerations in an x-y-plane which is substantially parallel to the sole of the shoe and wherein the x-direction and y-direction are orthogonal to each other in the x-y plane. The acceleration sensor can also be configured to measure accelerations in three directions, x, y and z, wherein the z-direction is the direction substantially perpendicular to the sole of the shoe. The system may comprise one or more acceleration sensors.

The signal processing system is configured to identify one or more acceleration values in the first acceleration signal associated with an impact of the foot on the surface, such as the impact that occurs when the foot, or heel of the foot, lands on the ground near the end of a step, i.e. near the second position. It should be noted that the impact of a foot on a surface may typically result in a peak in the first acceleration signal around the moment of impact, due to the large (negative) acceleration of the foot associated with the impact.

The signal processing system is also configured to process these identified one or more acceleration values to obtain a processing result.

The applicant has realized that valuable results can be obtained by identifying the peak and processing the values associated with the peak in one or more ways. The valuable results include at least one or more of a more accurate step distance and/or information of a running style and/or shoe characteristic of the user.

The processing involves using the values of the first acceleration signal associated with the peak to either manipulate these values, derive new acceleration values, ignoring these values and replace them by one or more new acceleration values or derive further information from the acceleration values associated with the peak.

It should be further noted that the processing of acceleration values associated with the peak may be reading the values of the identified points in order to derive valuable information. It may also be that the processing comprises modifying the identified acceleration values associated with the peak points in order to obtain a smoother second acceleration signal, substantially without the peak, thereby substantially reducing an error in subsequent calculations as will be explained below.

The processing of the identified one or more acceleration values involves calculating one or more acceleration values in a peak region of the first acceleration signal to obtain a second acceleration signal that is smooth in a region associated with the impact of the foot on the surface. The embodiment provides an efficient method to substantially cut off the peak in an acceleration signal associated with the foot impact of the user. The acceleration values associated with the peak may be adjusted, for example, to the level of acceleration values measured just prior to and after the peak. In another example, the calculated values may be obtained from averaging one or more acceleration values in the peak region. As yet another example, the acceleration values of the first acceleration signal on both sides near the peak region are used for estimating the smooth part of the second acceleration signal.

In one embodiment, the processing of the second acceleration signal may comprise double integration of the second acceleration signal measured between the first position of the foot and the second position of the foot. From the second acceleration signal, the step distance between the first and second position of the foot is determined as the processing result. For example, it may be that a first acceleration signal contains a peak associated with the impact of a foot on the ground. If this first acceleration signal is then double integrated to determine the step distance, the peak may induce a substantial error. When, however, the peak is substantially removed from the first acceleration signal as disclosed herein, and thus modified into a second acceleration signal as explained above, a more accurate step distance can be determined. This is a valuable result of processing the acceleration values in the peak region, in this case calculating one or more new acceleration values.

In one embodiment, the determination of the step distance comprises a single integration of the second acceleration signal measured between times associated with the first position of the foot and the second position of the foot on the surface. A speed of the foot between the first position of the foot and the second position of the foot is determined. A boundary condition is applied that the speed of the foot in either the first position or in the second position of the foot is zero. An acceleration error is determined by equalizing the acceleration error with the speed of the foot in either the first or in the second position of the foot divided by a time duration of the movement of the foot from the first position of the foot to the second position of the foot on the surface.

The embodiment is advantageous in that a measurement of the rotation of the foot, that introduces the acceleration error, is not required by applying the boundary condition that the speed of the foot is zero in at least one of the first position or second position of the foot.

In one embodiment, the acceleration values in the first acceleration signal associated with the impact of the foot on the surface may be identified by applying a condition to neighboring acceleration values in the first acceleration signal. Neighboring acceleration values may include direct neighbors or indirect neighbors, e.g. in a range of 2-5 measurement points from the peak. How many values and which values are considered neighboring acceleration values may also depend on the sampling rate of the first acceleration signal. The applied condition may be that the difference between two subsequent acceleration values exceeds a certain threshold value. Another condition may be that three subsequent acceleration values, a1, a2, a3, satisfy a condition, e.g. that (a1-a2)+(a3-a2) exceeds a certain threshold value. It may also be that a condition is applied to four neighboring values. Other conditions applied to any number of neighboring acceleration values may be used as well for the identification of the acceleration values that are associated with the impact of the foot on the surface.

Another aspect of the present disclosure pertains to a system wherein the signal processing system is configured to determine user information as the processing result from the identified one or more acceleration values in the first acceleration signal.

The applicant has realized that a peak associated with an impact of the foot on the surface in an acceleration signal measured in response to acceleration of a foot contains valuable information, that can be obtained after identification and processing of the peak. A first valuable result has been discussed above and relates to an error reduction in calculations based on acceleration signals of a foot for determining a step distance. A second valuable processing result relates to user information. The processing may comprise reading the acceleration values of the points in the peak.

In one embodiment, the user information may comprise at least one of exercise information for the user and material characteristics of footwear worn on the foot. For example, the level of the values associated with the impact on the surface may inform the user on his running style and provide insight into possible improvements thereof. Also, for example, the level of the values associated with the impact of the surface may inform the user on characteristics of his material, such as shock-damping capabilities of his shoe, or more specifically, of the sole of the shoe.

In one embodiment, the first position of the foot is identified by applying a condition to further acceleration values, that are obtained in response to measuring an acceleration of the foot in a direction substantially perpendicular to the sole of the shoe. For example, an acceleration sensor may be configured such that it measures at least the acceleration in the z-direction, which is substantially perpendicular to the sole of the shoe. A condition may be applied to the measured acceleration values in the z-direction, in order to determine at which moment the toe of a shoe takes off from the ground to, for example, determine the first position of the foot.

In one embodiment, the system may comprise a first and a second component. The first component may comprise the acceleration sensor and be attachable to the foot. The second component may comprise at least a part of the signal processing system. The first and second component may be separate components, and may be configured to connect to each other, such that at least the processing result is obtained in the second component. An example could be that the first component comprises the acceleration sensor and the second component is worn elsewhere by the user, e.g. as a watch or communication device. It should be appreciated that the first and second component may connect with each other through a wire, or wirelessly.

One aspect of the present disclosure also pertains to a foot-wearable structure, such as a shoe, or such as an athletic shoe, that comprises at least part of the system. For example a running shoe that contains the acceleration sensor of the system in the sole of the shoe and performs the signal processing to obtain the valuable result. The valuable result may be displayed in or outside of the system.

One aspect of the present disclosure also relates to a computer-implemented method for processing the first acceleration signal according to claim 10.

One aspect of the present disclosure also pertains to a computer program or suite of computer programs comprising at least one software code portion or to a computer program product storing at least one software code portion. The software code portion, when run on a computer system, is configured for executing the method described above. For example, it may be that an acceleration signal is stored on a device and that the signal is processed by a computer program after the signal has been loaded into the computer program. The computer system may comprise a microprocessor embedded in the sensor.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electro-magnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

BRIEF DESCRIPTION OF THE DRAWINGS

Aspects of the invention will be explained in greater detail by reference to exemplary embodiments shown in the drawings, in which:

FIG. 1 is an illustration of an athlete running on a surface;
FIG. 2 is a schematic illustration of an athletic shoe worn by the athlete depicted in FIG. 1 containing at least part of a system according to an embodiment of the present disclosure;
FIG. 3 is a diagram of a first acceleration signal output by an acceleration sensor of the system of FIG. 2;
FIG. 4 is a schematic illustration of a system for measuring and processing a foot acceleration signal according to an embodiment of the present disclosure;
FIG. 5 is a schematic illustration of a signal processing system in the system of FIG. 4;
FIG. 6 is a flow chart containing steps of a method of processing a foot acceleration signal.
FIGS. 7A and 7B are diagrams of a first acceleration signal wherein acceleration values of a peak region are identified resp. a second acceleration signal with a reduced peak in the peak region;

FIG. 8 is a flow chart illustrating an algorithm for obtaining a step distance from the second acceleration signal of FIG. 7B;

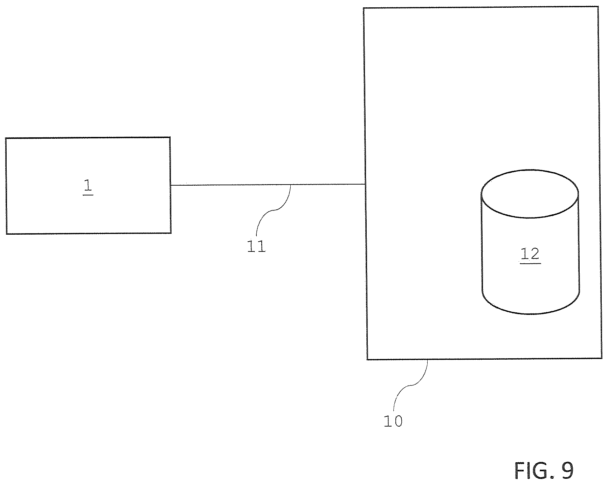

FIG. 9 is a system for determining user information from the acceleration values of the peak region of the first acceleration signal of FIG. 7A;

FIGS. 10A-10B illustrate dual-component systems for processing foot acceleration signals as disclosed herein; and

FIG. 11 is a schematic block diagram of a general system, such as a computer system for managing consignment flows in a delivery network.

## DETAILED DESCRIPTION OF THE DRAWINGS

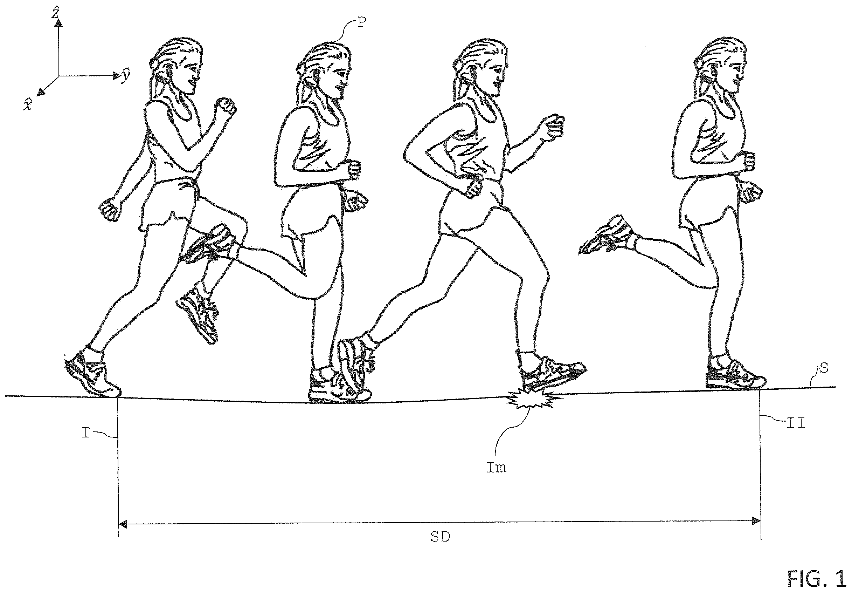

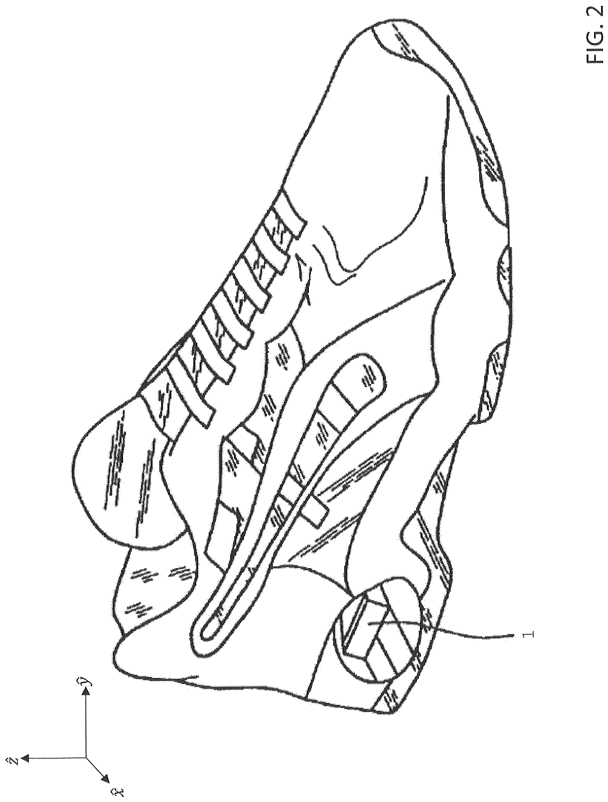

FIG. 1 shows a walking or running person P over a surface S wearing athletic shoes. To at least one of the shoes, a system 1 is attached, e.g. incorporated in the sole of the shoe as shown in more detail in FIG. 2. The system may also be attached to another part of the shoe or directly to the foot of the person P.

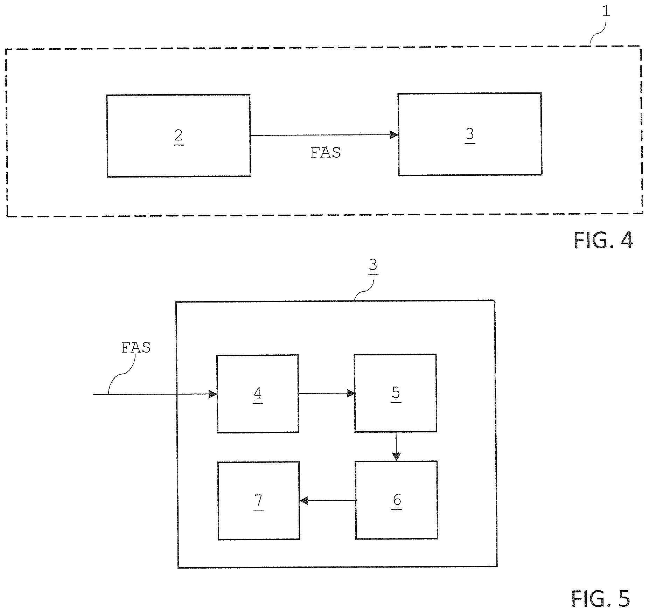

The system 1 comprises at least an acceleration sensor 2, as shown in FIG. 4. The acceleration sensor 2 measures an acceleration of the foot of the person P in a direction wherein the acceleration sensor is mounted. In the embodiment of FIGS. 1 and 2, the acceleration sensor 2 is mounted such that accelerations $a_x$ and $a_y$ can be determined in an x-y plane substantially parallel to the surface S.

In order to determine a step distance SD, a first position I and a second position II of the foot may be determined. In FIG. 1, the first position I of the foot is defined as the position of the toe of the foot at the moment the foot takes off from the ground. This position may be determined from an analysis of the acceleration of the foot in the z-direction. The second position II is defined as the position of the toe when the toe touches the ground again. The second position II may also be determined from the acceleration in the z-direction or may be determined by monitoring a zero crossing after a large negative peak corresponding to the impact IM.

When the foot of the person P lands on the surface S as shown in FIG. 1, the impact IM of the foot on the surface S is registered by the acceleration sensor 2.

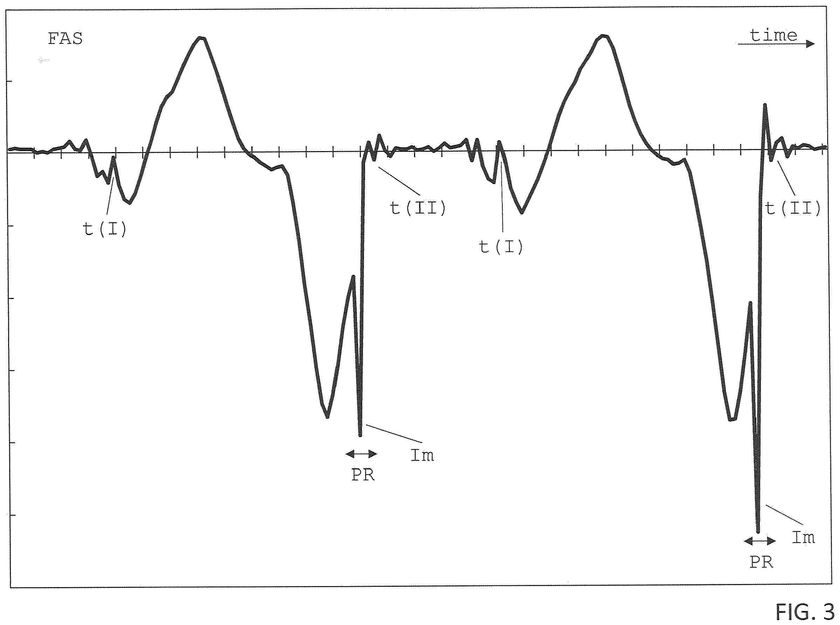

FIG. 3 is a diagram of a first acceleration signal FAS output by an acceleration sensor mounted to the shoe of the person P shown in FIG. 1 wherein the vertical axis represents the measured acceleration in the running direction of the person P, and the horizontal axis represents the time. Clearly, the impact IM of the foot on the surface S is visible between the time t(I) at which the foot was in the first position I and the time t(II) that the foot is in the second position II of the foot on the surface. The impact IM results in a sharp peak in a peak region PR of the first acceleration signal FAS.

As shown in FIG. 3, the first acceleration signal FAS is repetitive in nature as every step is similar to a previous step, but may vary greatly between different persons P, different shoes, different surfaces S, etc. This is also true for the peak associated with the impact IM.

FIG. 4 is a schematic illustration of the system 1 comprising the at least one acceleration sensor 2 and a signal processing system 3. The acceleration sensor 2 measures the forward acceleration and generates the first acceleration signal FAS in response as shown in FIG. 3. The first acceleration signal FAS is then processed by the signal processing system 3 to obtain a processing result.

FIG. 5 is a schematic illustration of a signal processing system 3 of the system 1. The first acceleration signal FAS is first amplified and converted to a digital signal by analog to digital conversion in a signal pre-processing stage 4. Sampling frequencies that may be used are e.g. in a range between 50 Hz and 500 Hz, e.g. 100 Hz or 200 Hz. The pre-processed first acceleration signal FAS is then fed into an identifier stage 5 configured to identify one or more acceleration values in the first acceleration signal, that are associated with the impact IM of the foot of the person P on the surface S.

The acceleration values in the first acceleration signal associated with the impact of the foot on the surface may be identified by applying a condition to neighboring acceleration values in the first acceleration signal FAS subsequent to detecting that the foot is off the ground (i.e. the first position I is passed). The condition should be such that the peak associated with the impact IM can be distinguished from at least the peak resulting from the downward motion of the foot towards the surface prior to the impact.

The applied condition may be that the difference between two subsequent acceleration values exceeds a certain threshold value. Another condition may be that three subsequent acceleration values, a1, a2, a3, satisfy a condition, e.g. that (a1-a2)+(a3-a2) exceeds a certain threshold value. It may also be that a condition is applied to four neighboring values. Other conditions applied to any number of neighboring acceleration values may be used as well for the identification of the acceleration values that are associated with the impact of the foot on the surface.

The signal processing system 3 may further comprise a processing stage 6 to process the identified acceleration values to obtain a processing result. The signal processing system 3 may further, optionally, comprise a display 7 for displaying the processing result or a derivative thereof.

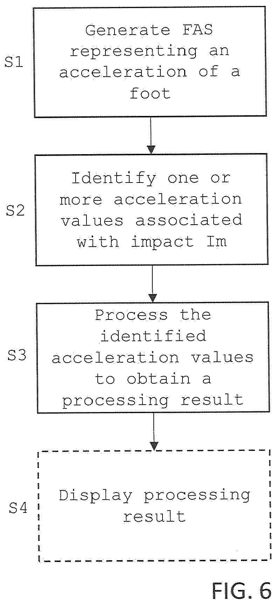

FIG. 6 is a flow chart illustrating some steps of a method for processing a foot acceleration signal, i.e. the first acceleration signal FAS.

In a first step S1, the first acceleration signal FAS is generated as a result of the measurement of the acceleration of the foot of the person P.

In a second step S2, one or more acceleration values are identified in the first acceleration signal FAS that are associated with the impact IM of the foot on the surface S.

In a third step S3, a processing result is obtained based on the identified one or more acceleration values.

Finally, in an optional step S4 as indicated by the dashed box in FIG. 6, the processing result (or a result derived from the processing result) may be displayed.

The processing result may comprise at least one of a step distance SD (or parameters derived thereof) and user information associated with running performance and/or material characteristics.

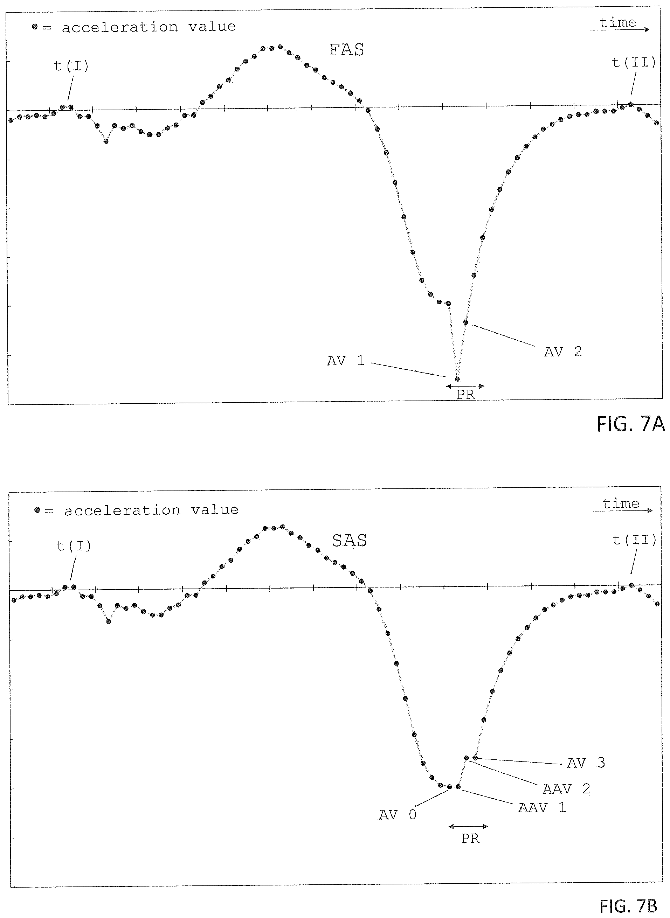

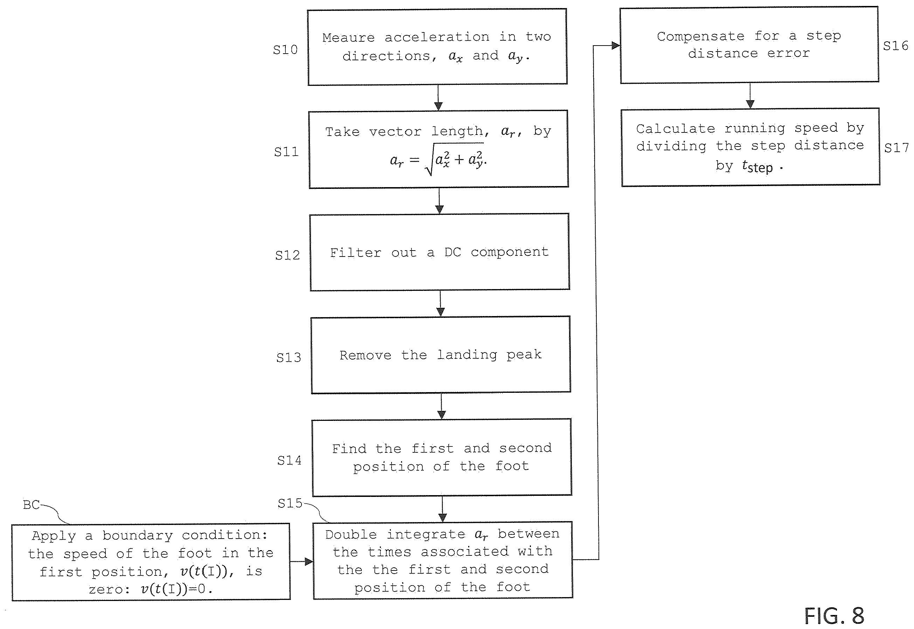

The determination of the step distance SD will now be described in further detail with reference to FIGS. 7A, 7B and 8.

FIG. 7A shows an example of a first acceleration signal FAS generated by an acceleration sensor 2 in response to an acceleration of a foot like the diagram of FIG. 3. The black dots in the first acceleration signal FAS mark the acceleration values of the foot obtained by measuring the acceleration of the foot at a particular sampling frequency. Again, the impact IM of the foot on the surface S causes a peak in a peak region PR of the signal as shown. This peak would induce an error in subsequent calculations, such as a double integration to determine the step distance SD.

As discussed with reference to FIG. 6, in a next step S2 the acceleration values in the peak region PR may be identified. From FIG. 7A, it is shown that two acceleration values, AV1 and AV2 have been identified, that are associated with an impact of a foot on the ground.

Processing the first acceleration signal FAS in step S3 of FIG. 6 is aimed at substantially eliminating the peak at the peak region PR caused by the impact IM. The processing involves calculating one or more acceleration values, e.g. from one or more of the identified one or more acceleration values AV1, AV2 to obtain a second acceleration signal SAS that is smoother in a region associated with the IM impact of the foot on the surface S. Smoothing relates to substantially cutting off the peak in peak region of the first acceleration signal FAS associated with the foot impact IM of the person P. The acceleration values associated with the peak may be adjusted, for example, to the level of acceleration values measured just prior to and after the peak. In another example, the calculated values may be obtained from averaging one or more acceleration values in the peak region.

FIG. 7B shows an example of the second acceleration signal SAS, that is obtained from the first acceleration signal as depicted in FIG. 7A. Acceleration value AV1 has been adjusted to the value AVV1 that is the same value as the acceleration value AV0 measured prior to acceleration value AV1. Acceleration value AV2 has been adjusted to the value AAV2 that is at the same level the acceleration value AV3 measured after acceleration value AV2. FIG. 7B shows the second acceleration signal SAS being smooth in the peak region PR associated with the impact of a foot on the surface S. The peak has been substantially eliminated, and thus does not induce an error in subsequent calculations.

A more detailed method for determining a step distance SD is shown in the flow chart of FIG. 8.

In step S10, the acceleration sensor 2 measures the acceleration in two directions, $a_x$ and $a_y$.

Then, in step S11, the vector length $a_r$ of these two acceleration signals is obtained as $a_r = \sqrt{(a_x^2 + a_y^2)}$. The acceleration sensor 2 generates acceleration values in three directions $a_x$, $a_y$ and $a_z$ after each sampling. The acceleration $a_r$ is the vector length in an x-y plane substantially parallel to the sole of the shoe. In the subsequent steps, acceleration $a_r$ is used.

In step S12, the DC component is filtered out to obtain the first acceleration signal FAS as shown in FIG. 7A. It should be noted that DC filtering may be omitted.

Steps S11 and S12 may be part of the preprocessing stage 4, as shown in in FIG. 5.

Then, in step S13, the peak in the first acceleration signal FAS is substantially removed to obtain a second acceleration signal SAS that is smooth in the peak region PR associated with the impact IM of the foot on the surface S. A second acceleration signal SAS with a smoothed signal in the peak region PR is shown in FIG. 7B.

In step S14, the times associated with first position I and the second position II of the foot are determined in the second acceleration signal SAS. It should be noted that these times may also be determined from the first acceleration signal FAS. Positions I and II may be determined from the acceleration in the z-direction, i.e. perpendicular to the sole of the shoe.

In S15, a step of double integration is performed for the second acceleration signal SAS between the times associated with the first and second position of the foot on the surface S. Removal of the peak due to the impact IM on the surface S provides for a more accurate determination of the step distance SD.

Because of the constantly changing angle between the shoe and the surface S, there is a complicated relationship between the acceleration $a_r$ in the running direction and the accelerations sensed by the acceleration sensor 2. This effect, however, may be ignored when the boundary condition BC is used that at the end, i.e. at the second position, of the step the velocity of the shoe is zero because it has landed on the surface S.

An example could be that the applied boundary condition is that the speed of the foot is zero in the first position of the foot. In this example, from a single integration of the second acceleration signal SAS and application of the above-mentioned boundary condition the speed of the foot in the second position, $v(t(II))$, can be calculated. The result of this calculation is not equal to zero due to an acceleration error, $a_{err}$, in the second acceleration signal, that arises from the complicated relationship mentioned above. The acceleration error may be approximated by dividing the calculated speed of the foot in the second position by the time duration of the movement of the foot from the first position I to the second position II, $t_{step}$. In formula:

$$a_{\mathrm{err}} = \frac{v(t(\mathrm{II}))}{t_{\mathrm{step}}}$$

In this embodiment, determining the step distance may comprise determining a step distance error, $x_{\mathrm{err}}$, by double integrating the acceleration error over the time duration of the movement of the foot from the first position I of the foot to the second position II of the foot, resulting in:

$$x_{\mathrm{err}} = \frac{a_{\mathrm{err}} t_{\mathrm{step}}^2}{2}$$

It may also comprise compensating for the step distance error. It should be noted that in the above example, the acceleration error is approximated from the second acceleration signal SAS measured by an acceleration sensor. Compensation of the step distance SD is shown as step S16 in FIG. 8.

Once the accurate step distance SD has been determined, one or more parameters may be derived. In FIG. 8, step S17 indicates determination of the running speed, calculated by dividing the step distance SD by the time duration $t_{\mathrm{step}}$ between the first position I and second position II of the foot on the surface S.

As mentioned above, the processing result may, in addition or alternatively, comprise user information, e.g. information associated with running performance and/or material characteristics of a shoe of the person P. The acceleration values in the peak region PR of the first acceleration signal FAS may differ significantly between different persons P, between different shoes of a person P and/or between different types of surface S (e.g. sand, asphalt, etc.). By e.g. taking an average of these values over a significant number of steps for a person, information can be obtained on the running performance of a person P. If, for example, the acceleration values in the peak region PR have high values (reflecting a high impact IM), the person P may be advised to land the shoe more softly on the surface S to avoid injury. As another example, if for a particular person P, the average acceleration value increases between successive runs to above a set threshold, an indication may be provided to the user that the shoe needs to be replaced because step damping performance of the sole of the shoe is reduced.

Such information may be obtained in and displayed on the system 1 itself, e.g. in a system 1 as shown in FIG. 4. Alternatively, the system 1 may obtain the first acceleration signal FAS over a plurality of steps and upload this information to an external system 10 over a connection 11, e.g. a cable connection to a personal device 10 or a connection over a network to an external server 10. The external system 10 comprises a storage 12 storing e.g. history data and rules to provide user information.

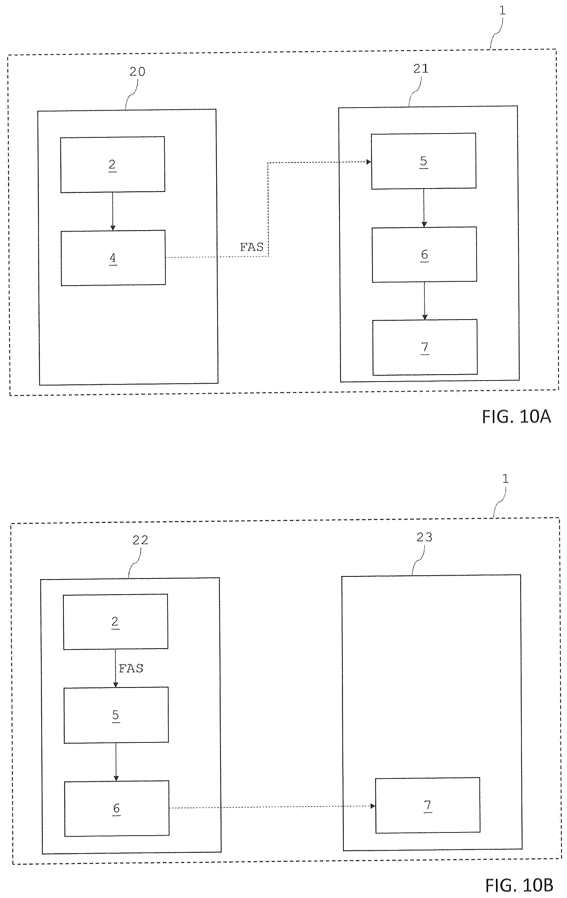

FIG. 10A is a schematic illustration of a configuration of a system 1 comprising two separate components 20, 21. In this configuration, the first component 20 comprises an acceleration sensor 2 and a preprocessing stage 4, that is part of the signal processing system 3. The second component 21 in this configuration comprises an identifier 5, a processor 6 (e.g. for smoothing the first acceleration signal FAS in the peak region PR) to obtain a processing result and a display 7. The processing result, e.g. the step distance SD, a parameter derived from the step distance SD and/or user information, in this configuration is shown on the display 7 in the second component. The first and second components 20, 21 may be connected wirelessly with each other. The second component may comprise a watch or other device to be worn by the person P or a computer device of the person P.

FIG. 10B is another schematic illustration of a configuration of a system 1 comprising two separate components 22, 23. In this configuration, the first component 22 comprises an acceleration sensor 2, an identifier 4 and a processor 6 that generates the processing result. The second component in this configuration comprises a display 7, that is part of the signal processing system 3 and depicts the processing result.

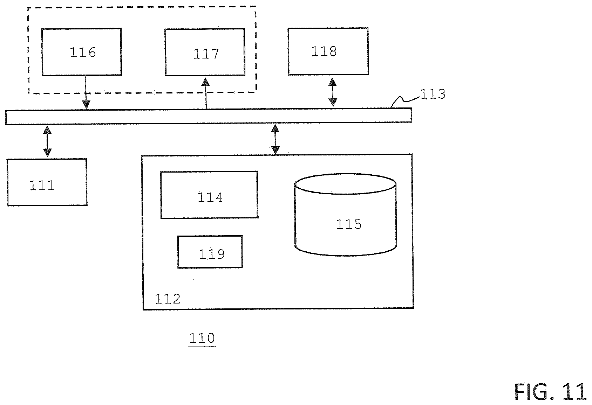

FIG. 11 is a schematic block diagram of a general system, such as the system 1 for processing foot acceleration signals or a signal processing system 3.

As shown in Fig. 11, the data processing system 110 may include at least one processor 111 coupled to memory elements 112 through a system bus 113. As such, the data processing system may store program code within memory elements 112. Further, the processor 111 may execute the program code accessed from the memory elements 112 via a system bus 113. In one aspect, the data processing system may be implemented as a computer that is suitable for storing and/or executing program code. It should be appreciated, however, that the data processing system 110 may be implemented in the form of any system including a processor and a memory that is capable of performing the functions described within this specification.

The memory elements 112 may include one or more physical memory devices such as, for example, local memory 114 and one or more bulk storage devices 115. The local memory may refer to random access memory or other non-persistent memory device(s) generally used during actual execution of the program code. A bulk storage device may be implemented as a hard drive or other persistent data storage device. The processing system 110 may also include one or more cache memories (not shown) that provide temporary storage of at least some program code in order to reduce the number of times program code must be retrieved from the bulk storage device 115 during execution.

Input/output (I/O) devices depicted as an input device 116 and an output device 117 optionally can be coupled to the data processing system. Examples of input devices may include, but are not limited to, a keyboard, a pointing device such as a mouse, or the like.

Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in FIG. 11 with a dashed line surrounding the input device 116 and the output device 117). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 118 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 110, and a data transmitter for transmitting data from the data processing system 110 to said systems, devices and/or networks. Modems, cable modems, and Ethernet cards are examples of different types of network adapter that may be used with the data processing system 110.

As pictured in FIG. 11, the memory elements 112 may store an application 119. In various embodiments, the application 119 may be stored in the local memory 114, the one or more bulk storage devices 115, or apart from the local memory and the bulk storage devices. It should be appreciated that the data processing system 110 may further execute an operating system (not shown in FIG. 11) that can facilitate execution of the application 119. The application 119, being implemented in the form of executable program code, can be executed by the data processing system 110, e.g., by the processor 111. Responsive to executing the application, the data processing system 110 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 111 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1.  A system configured to process a first acceleration signal, the system comprising:

    at least one acceleration sensor for measuring acceleration of a foot during a movement of the foot from a first position of the foot on a surface to a second position of the foot on the surface and for generating the first acceleration signal comprising a plurality of acceleration values in response to measuring the acceleration;
    a signal processing system configured to identify one or more acceleration values in a peak region of the first acceleration signal associated with an impact of the foot on the surface;
    **characterized in that**
    the signal processing system is configured to, after identification of said one or more acceleration values, process the identified one or more acceleration values by calculating one or more acceleration values in the peak region of the first acceleration signal to obtain a second acceleration signal that is smooth in the peak region associated with the impact of the foot on the surface.

2.  The system of claim 1, wherein the processing comprises:

    double integration of the second acceleration signal measured between times associated with the first position of the foot and the second position of the foot;
    determining, from the double integration of the second acceleration signal, a step distance between the first and second position of the foot as the processing result.

3. The system of claim 2, wherein determining the step distance comprises:

single integration of the second acceleration signal measured between times associated with the first position of the foot and the second position of the foot;

determining, from the second acceleration signal, a speed of the foot between the first position of the foot and the second position of the foot;

applying a boundary condition that the speed of the foot in either the first position or in the second position of the foot is zero;

determining an acceleration error by equalizing the acceleration error with the speed of the foot in either the first or in the second position of the foot divided by a time duration of the movement of the foot from the first position of the foot to the second position of the foot;

determining a step distance error by double integrating the acceleration error between times associated with the first position of the foot to the second position of the foot;

compensating for the step distance error.

4. The system according to one or more of the claims 1-3, wherein the identified one or more acceleration values in the peak region of the first acceleration signal associated with the impact of the foot on the surface are identified by applying a condition to neighboring acceleration values in the peak region of first acceleration signal.

5. The system according to one or more of the preceding claims, wherein the signal processing system is configured to determine user information as the processing result from the identified one or more acceleration values in the peak region of the first acceleration signal.

6. The system according to claim 5, wherein the user information comprises at least one of exercise information for the user and material characteristics of footwear worn on the foot.

7. The system according to one or more of the preceding claims wherein the first position of the foot is identified by applying a condition to further acceleration values, that are obtained in response to measuring an acceleration of the foot in a direction substantially perpendicular to the surface.

8. The system according to one or more of the preceding claims, wherein the system comprises:

a first component comprising the acceleration sensor and is attachable to the foot;

a second component comprising at least a part of the signal processing system;

wherein the first and second component are separate components;

and wherein the first and second component are configured to connect to each other such that at least the processing result is obtained in the second component.

9. A foot-wearable structure comprising the system of one of the preceding claims.

10. A computer-implemented method for processing a first acceleration signal, wherein the method comprises the steps of:

measuring an acceleration of a foot during a movement of the foot from a first position of the foot on a surface to a second position of the foot on the surface and generating the first acceleration signal comprising a plurality of acceleration values in response to measuring the acceleration with at least one acceleration sensor;

processing the first acceleration signal with a signal processing system, wherein the processing involves:

identifying one or more acceleration values in a peak region of the first acceleration signal associated with an impact of the foot on the surface; and then perform the characterizing step of

processing the identified one or more acceleration values by calculating one or more acceleration values in the peak region of the first acceleration signal to obtain a second acceleration signal that is smooth in the peak region associated with the impact of the foot on the surface.

11. The method of claim 10, further comprising steps in the signal processing system as defined in claim 2-8.

12. A computer program or suite of computer programs comprising at least one software code portion or a computer program product storing at least one software code portion, the software code portion, when run on a computer system, being configured for processing the first acceleration signal as defined in claim 10 or 11.

**Patentansprüche**

1. System, das dafür konfiguriert ist, ein erstes Beschleunigungssignal zu verarbeiten, wobei das System aufweist:

mindestens einen Beschleunigungssensor zum Messen der Beschleunigung eines Fußes während einer Bewegung des Fußes von einer ersten Position des Fußes auf einer Oberfläche zu einer zweiten Position des Fußes auf der Oberfläche und zum Erzeugen des ersten Beschleunigungssignals, das mehrere Beschleunigungswerte aufweist, als Antwort auf das Messen der Beschleunigung;

ein Signalverarbeitungssystem, das dafür konfiguriert ist, einen oder mehrere Beschleunigungswerte in einem Peakbereich des ersten Beschleunigungssignals zu identifizieren, der einem Aufprall des Fußes auf die Oberfläche zugeordnet ist;

**dadurch gekennzeichnet, dass**

das Signalverarbeitungssystem dafür konfiguriert ist, nach dem Identifizieren des einen oder der mehreren Beschleunigungswerte den identifizierten einen oder die identifizierten mehreren Beschleunigungswerte durch Berechnen eines oder mehrerer Beschleunigungswerte im Peakbereich des ersten Beschleunigungssignals zu verarbeiten, um ein zweites Beschleunigungssignal zu erhalten, das im Peakbereich, der dem Aufprall des Fußes auf die Oberfläche zugeordnet ist, glatt ist.

2. System nach Anspruch 1, wobei das Verarbeiten aufweist:

doppelte Integration des zweiten Beschleunigungssignals, das zwischen Zeiten gemessen wird, die der ersten Position des Fußes und der zweiten Position des Fußes zugeordnet sind; Bestimmen einer Schrittweite zwischen der ersten und der zweiten Position des Fußes als das Verarbeitungsergebnis aus der doppelten Integration des zweiten Beschleunigungssignals.

3. System nach Anspruch 2, wobei das Bestimmen der Schrittweite aufweist:

einfache Integration des zweiten Beschleunigungssignals, das zwischen Zeiten gemessen wird, die der ersten Position des Fußes und der zweiten Position des Fußes zugeordnet sind; Bestimmen einer Geschwindigkeit des Fußes zwischen der ersten Position des Fußes und der zweiten Position des Fußes aus dem zweiten Beschleunigungssignal;

Anwenden einer Randbedingung, dass die Geschwindigkeit des Fußes entweder in der ersten Position oder in der zweiten Position des Fußes Null beträgt;

Bestimmen eines Beschleunigungsfehlers durch Abgleichen des Beschleunigungsfehlers mit der Geschwindigkeit des Fußes entweder in der ersten oder in der zweiten Position des Fußes, geteilt durch eine Zeitdauer der Bewegung des Fußes von der ersten Position des Fußes zur zweiten Position des Fußes;

Bestimmen eines Schrittweitenfehlers durch doppelte Integration des Beschleunigungsfehlers zwischen Zeiten, die der ersten Position des Fußes zur zweiten Position des Fußes zugeordnet sind; und

Kompensieren des Schrittweitenfehlers.

4. System nach einem oder mehreren der Ansprüche 1 bis 3, wobei der identifizierte Beschleunigungswert oder die identifizierten Beschleunigungswerte im Peakbereich des ersten Beschleunigungssignals, der dem Aufprall des Fußes auf die Oberfläche zugeordnet ist, durch Anwenden einer Bedingung auf benachbarte Beschleunigungswerte im Peakbereich des ersten Beschleunigungssignals identifiziert werden.

5. System nach einem oder mehreren der vorangehenden Ansprüche, wobei das Signalverarbeitungssystem dafür konfiguriert ist, aus dem identifizierten einen oder den identifizierten mehreren Beschleunigungswerten im Peakbereich des ersten Beschleunigungssignals Benutzerinformation als das Verarbeitungsergebnis zu bestimmen.

6. System nach Anspruch 5, wobei die Benutzerinformation Trainingsinformation für den Benutzer und/oder Materialeigenschaften von am Fuß getragenem Schuhwerk aufweist.

7. System nach einem oder mehreren der vorangehenden Ansprüche, wobei die erste Position des Fußes durch Anwenden einer Bedingung auf weitere Beschleunigungswerte identifiziert wird, die als Antwort auf das Messen einer Beschleunigung des Fußes in einer Richtung erhalten werden, die sich im Wesentlichen senkrecht zu der Oberfläche erstreckt.

8. System nach einem oder mehreren der vorangehenden Ansprüche, wobei das System aufweist:

eine erste Komponente, die den Beschleunigungssensor aufweist und am Fuß befestigbar ist; und

eine zweite Komponente, die mindestens einen Teil des Signalverarbeitungssystems aufweist, wobei die erste und zweite Komponente separate Komponenten sind, und

wobei die erste und die zweite Komponente dafür konfiguriert sind, sich miteinander zu verbinden, so dass zumindest das Verarbeitungsergebnis in der zweiten Komponente erhalten wird.

9. Am Fuß tragbare Struktur mit dem System nach einem der vorangehenden Ansprüche.

10. Computerimplementiertes Verfahren zum Verarbeiten eines ersten Beschleunigungssignals, wobei das Verfahren die Schritte aufweist:

Messen einer Beschleunigung eines Fußes während einer Bewegung des Fußes von einer ersten Position des Fußes auf einer Oberfläche zu einer zweiten Position des Fußes auf der Oberfläche und Erzeugen des ersten Beschleunigungssignals, das mehrere Beschleunigungswerte aufweist, als Antwort auf das Messen der Beschleunigung durch mindestens einen Beschleunigungssensor;
Verarbeiten des ersten Beschleunigungssignals durch ein Signalverarbeitungssystem, wobei die Verarbeitung aufweist:

Identifizieren eines oder mehrerer Beschleunigungswerte in einem Peakbereich des ersten Beschleunigungssignals, der einem Aufprall des Fußes auf die Oberfläche zugeordnet ist; und dann Ausführen des Kennzeichnungsschritts
Verarbeiten des identifizierten einen oder der mehreren Beschleunigungswerte durch Berechnen eines oder mehrerer Beschleunigungswerte im Peakbereich des ersten Beschleunigungssignals, um ein zweites Beschleunigungssignal zu erhalten, das in dem dem Aufprall des Fußes auf der Oberfläche zugeordneten Peakbereich glatt ist.

11. Verfahren nach Anspruch 10, ferner mit Schritten in dem Signalverarbeitungssystem nach einem der Ansprüche 2 bis 8.

12. Computerprogramm oder Folge von Computerprogrammen, das/die mindestens einen Softwarecodeabschnitt aufweist/aufweisen, oder ein Computerprogrammprodukt, das mindestens einen Softwarecodeabschnitt speichert, wobei der Softwarecodeabschnitt, wenn er auf einem Computersystem ausgeführt wird, dafür konfiguriert ist, das erste Beschleunigungssignals wie in Anspruch 10 oder 11 definiert ist zu verarbeiten.

**Revendications**

1. Système configuré de manière à traiter un premier signal d'accélération, le système comprenant :

au moins un capteur d'accélération destiné à mesurer l'accélération d'un pied au cours d'un mouvement du pied, d'une première position du pied sur une surface à une seconde position du pied sur la surface, et à générer le premier signal d'accélération comprenant une pluralité de valeurs d'accélération en réponse à la mesure de l'accélération ;
un système de traitement de signal configuré de manière à :

identifier une ou plusieurs valeurs d'accélération dans une région de crête du premier signal d'accélération, associée à un impact du pied sur la surface ;
**caractérisé en ce que** :
le système de traitement de signal est configuré de manière à, suite à une identification de ladite une ou desdites plusieurs valeurs d'accélération, traiter ladite une ou lesdites plusieurs valeurs d'accélération identifiées, en calculant une ou plusieurs valeurs d'accélération dans la région de crête du premier signal d'accélération, en vue d'obtenir un second signal d'accélération qui est lisse dans la région de crête associée à l'impact du pied sur la surface.

2. Système selon la revendication 1, dans lequel l'étape de traitement comprend : une double intégration du second signal d'accélération mesuré entre des instants associés à la première position du pied et à la seconde position du pied ;
l'étape consistant à déterminer, à partir de la double intégration du deuxième signal d'accélération, une distance de pas entre la première position et la seconde position du pied, en tant que le résultat de traitement.

3. Système selon la revendication 2, dans lequel l'étape de détermination de la distance de pas comprend :

une intégration unique du second signal d'accélération mesuré entre des instants associés à la première position du pied et à la seconde position du pied ;
l'étape consistant à déterminer, à partir du second signal d'accélération, une vitesse du pied entre la première position du pied et la seconde position du pied ;
l'étape consistant à appliquer une condition limite selon laquelle la vitesse du pied dans la première position ou dans la seconde position du pied est nulle ;
l'étape consistant à déterminer une erreur d'accélération en égalisant l'erreur d'accélération avec la vitesse du pied dans la première position du pied ou dans la seconde position du pied, divisée par une durée du mouvement du pied de la première position du pied à la seconde position du pied ;

l'étape consistant à déterminer une erreur de distance de pas par une double intégration de l'erreur d'accélération entre des instants associés à la première position du pied et à la seconde position du pied ;

l'étape consistant à compenser l'erreur de distance de pas.

4. Système selon l'une ou plusieurs des revendications 1 à 3, dans lequel ladite une ou lesdites plusieurs valeurs d'accélération identifiées dans la région de crête du premier signal d'accélération, associée à l'impact du pied sur la surface, sont identifiées en appliquant une condition à des valeurs d'accélération voisines dans la région de crête du premier signal d'accélération.

5. Système selon l'une ou plusieurs des revendications précédentes, dans lequel le système de traitement de signal est configuré de manière à déterminer des informations d'utilisateur, en tant que le résultat de traitement, à partir de ladite une ou desdites plusieurs valeurs d'accélération identifiées dans la région de crête du premier signal d'accélération.

6. Système selon la revendication 5, dans lequel les informations d'utilisateur comprennent au moins l'une parmi des informations d'exercice pour l'utilisateur et des caractéristiques de matière des chaussures portées aux pieds.

7. Système selon l'une ou plusieurs des revendications précédentes, dans lequel la première position du pied est identifiée en appliquant une condition à des valeurs d'accélération supplémentaires, lesquelles sont obtenues en réponse à la mesure d'une accélération du pied dans une direction sensiblement perpendiculaire à la surface.

8. Système selon l'une ou plusieurs des revendications précédentes, dans lequel le système comprend :

un premier composant comprenant le capteur d'accélération et pouvant être fixé au pied ;

un second composant comprenant au moins une partie du système de traitement de signal ;

dans lequel le premier composant et le second composant sont des composants distincts ; et

dans lequel premier composant et le second composant sont configurés de manière à se connecter l'un à l'autre de sorte qu'au moins le résultat de traitement soit obtenu dans le second composant.

9. Structure chaussante comprenant le système selon l'une quelconque des revendications précédentes.

10. Procédé, mis en oeuvre par ordinateur, de traitement d'un premier signal d'accélération, dans lequel le procédé comprend les étapes ci-dessous consistant à :

mesurer une accélération d'un pied au cours d'un mouvement du pied, d'une première position du pied sur une surface à une seconde position du pied sur la surface, et générer le premier signal d'accélération comprenant une pluralité de valeurs d'accélération en réponse à la mesure de l'accélération avec au moins un capteur d'accélération ;

traiter le premier signal d'accélération avec un système de traitement de signal, dans lequel l'étape de traitement implique les étapes consistant à : identifier une ou plusieurs valeurs d'accélération dans une région de crête du premier signal d'accélération, associée à un impact du pied sur la surface ; et mettre ensuite en oeuvre l'étape de caractérisation consistant à : traiter ladite une ou lesdites plusieurs valeurs d'accélération identifiés, en calculant une ou plusieurs valeurs d'accélération dans la région de crête du premier signal d'accélération, en vue d'obtenir un second signal d'accélération qui est lisse dans la région de crête associée à l'impact du pied sur la surface.

11. Procédé selon la revendication 10, comprenant en outre des étapes dans le système de traitement de signal selon l'une quelconque des revendications 2 à 8.

12. Programme informatique ou suite de programmes informatiques comprenant au moins une partie de code logiciel ou un produit-programme informatique stockant au moins une partie de code logiciel, la partie de code logiciel, lorsqu'elle est exécutée sur un système informatique, étant configurée de manière à traiter le premier signal d'accélération selon la revendication 10 ou 11.

FIG. 1

FIG. 2

FIG. 3

FIG. 4

FIG. 5

| | |
|---|---|
| S1 | Generate FAS representing an acceleration of a foot |
| S2 | Identify one or more acceleration values associated with impact Im |
| S3 | Process the identified acceleration values to obtain a processing result |
| S4 | Display processing result |

FIG. 6

18

FIG. 7A

FIG. 7B

EP 3 112 811 B1

S10 — Meaure acceleration in two directions, $a_x$ and $a_y$.

S11 — Take vector length, $a_r$, by
$$a_r = \sqrt{a_x^2 + a_y^2}.$$

S12 — Filter out a DC component

S13 — Remove the landing peak

S14 — Find the first and second position of the foot

S15 — Double integrate $a_r$ between the times associated with the the first and second position of the foot

BC — Apply a boundary condition: the speed of the foot in the first position, $v(t(\mathrm{I}))$, is zero: $v(t(\mathrm{I}))=0$.

S16 — Compensate for a step distance error

S17 — Calculate running speed by dividing the step distance by $t_{\text{step}}$.

FIG. 8

FIG. 9

FIG. 10A

FIG. 10B

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6356856 B
- US 20080214360 A1
- EP 1253404 A2
- EP 1019789 A1